# EUROPÄISCHE PATENTSCHRIFT

(11) **EP 1 836 748 B1**
(45) Veröffentlichungstag und Bekanntmachung des Hinweises auf die Patenterteilung: **23.11.2011**
(21) Anmeldenummer: 06707695.0
(22) Anmeldetag: 10.01.2006
(51) Int. Cl.: E06B 3/08, E06B 7/28, H01R 25/14

(54) **PROFIL FÜR EIN FENSTER, EINE TÜR ODER EIN FASSADENELEMENT MIT ELEKTRISCHEM KABEL**
SECTION FOR A WINDOW, DOOR OR FAÇADE ELEMENT COMPRISING AN ELECTRIC CABLE
PROFILE POUR FENETRE, PORTE OU ELEMENT DE FAÇADE AVEC CABLE ELECTRIQUE

(30) Priorität: 14.01.2005 DE 20500609 U; 14.01.2005 DE 20500580 U; 14.01.2005 DE 20500579 U
(43) Veröffentlichungstag der Anmeldung: 26.09.2007
(73) Patentinhaber: SCHÜCO International KG, 33609 Bielefeld (DE)
(72) Erfinder: WILKER, Burkhard, 32760 Detmold (DE); HANKE, Carsten, 33613 Bielefeld (DE)
(74) Vertreter: Dantz, Jan Henning
(86) Internationale Anmeldenummer: PCT/EP2006/050127
(87) Internationale Veröffentlichungsnummer: WO 2006/074998

(56) Entgegenhaltungen:
- EP-A- 0 475 417
- EP-A- 1 094 186
- EP-A- 1 229 207
- EP-A- 1 391 967

## Beschreibung

Die Erfindung betrifft ein Profil für ein Fenster, eine Tür oder ein Fassadenelement nach dem Oberbegriff des Anspruchs 1, 17 oder 35 und ein Fenster, eine Tür oder ein Fassadenelement mit einem derartigen Profil nach Anspruch 44.

Bei Fenstern oder Türen mit elektrischen Funktionselementen wie elektromotorischen oder elektromagnetischen Antrieben oder Beschlägen oder Sensoren oder mit anderen Stromverbrauchern ist es notwendig, zu den elektrischen Funktionselementen ein Kabel zur Energieversorgung und/oder Steuerung zu legen.

Nach dem Stand der Technik werden Kabel zu diesem Zweck bei Fassaden z.B. durch Hohlkammern geführt oder am Außenumfang lose verlegt, siehe EP1094186B1, EP1229207A2 und EP1391967 A1. Eine Lösung mit einer Kabelführung durch die Hohlkammern zeigt die EP 0 475 417 B2. Die Schrift zeigt auch eine Fassadenkonstruktion mit einer am Außenumfang eines Isolierprofils oder eines Außenprofils im Bereich des Glasfalzes angeordneten Kabelnut zur formschlüssigen Aufnahme eines elektrischen Kabels. Nachteilig sind hier insbesondere die nur schwierige Kontaktierbarkeit im Bereich des Glasfalzes sowie die Anordnung in einem feuchten Bereich an der Fassade, was die Gefahr von Kriechströmen und Korrosion mit sich bringt.

Zudem sind die bekannten Anordnungen oftmals optisch nicht zufriedenstellend und genügen auch aus weiteren Gründen nicht den Anforderungen an einen modernen Montageablauf, z.B., da die Hohlkammern im Eckbereich mit Eckverbindern zu verschließen sind - was aufwendige weitere Bearbeitungen z.B. durch Fräsen zum Verlegen der Kabel durch den Eckbereich erforderlich machen kann - oder da in Nuten, in welche die Kabel eingelegt werden, noch weitere Funktionselemente angeordnet werden müssen. Die Kabel liegen damit quasi offen und ungeschützt, stören derart die Optik und die Montage und verteuern die Produktion. Auch sind aufwendige Kontaktierungen bzw. Anschlüsse erforderlich.

Problematisch ist insbesondere auch die oftmals nur schwierige Anschließbarkeit elektrischer Anschlussvorrichtungen an die elektrischen Kabel.

Die Erfindung hat die Aufgabe, das letztgenannte Problem zu lösen und das Profil nebst elektrischem Kabel derart weiterzubilden, dass auf einfache Weise an das Kabel Stecker oder dgl. anschließbar sind.

Die Erfindung löst diese Aufgabe durch den Gegenstand des Anspruchs 1, 17 oder 35 und durch ein Fenster, Tür oder Fassadenelement mit einem derartigen Gegenstand nach Anspruch 44.

Sie schafft ein Rahmenprofil für einen Blend- oder Flügelrahmen eines Fensters, einer Tür oder einer Fassade mit einer am Außenumfang des Profils angeordneten, hinterschnittenen Kabelnut zur formschlüssigen Aufnahme eines elektrischen Kabels mit zwei oder mehr elektrischen Leitern und weist einen auf das Kabel aufsetzbaren und am Profil befestigten Zentrierrahmen für das Kabel auf.

Unter Profil im Sinne der Anmeldung sind sowohl ein mehrteiliges Verbundprofil zu verstehen als auch ein einzelnes Metallprofil zur Herstellung eines Blend- oder Flügelrahmens.

Die Kabelnut ermöglicht in einfachster Weise eine platzsparende, optisch vorteilhafte Unterbringung eines mehradrigen elektrischen Kabels direkt am Profil, insbesondere an einem der Profile des Flügelrahmens. Eine Unterbringung am Blendrahmen ist ebenfalls denkbar, die Anordnung am Flügelrahmen wird aber bevorzugt, wenn dort auch die zu versorgenden und anzusteuernden Verbraucher und Funktionselemente untergebracht sind.

Der Zentrierrahmen weist relativ zum Kabel, insbesondere zum bevorzugten Flachbandkabel, eine definierte Position auf und gewährleistet es, die Leiter des Kabels, insbesondere des Flachbandkabels an definierter Stelle sicher mit einem Stecker z.B. mit isolationsdurchstechenden oder -schneidenden Kontakten (Piercingstecker) kontaktieren zu können. Die Montage wird derart deutlich vereinfacht.

Bevorzugt ist der Kabelmantel mit einer nutartigen Einkerbung versehen, die sich vorzugsweise parallel zu den Leitern erstreckt und der Zentrierrahmen weist einen korrespondierenden Steg zum Eingriff in die Einkerbung auf, was die Zentrierung auf einfache Weise sicher gewährleistet. Vorzugsweise verfügen die Einkerbung und der Steg zu diesem Zweck über korrespondierende, sich konisch verjüngende Querschnitte, so dass sie sich beim Zusammenstecken "finden" und selbstlehrend aneinander ausrichten.

Besonders bevorzugt ist in den Zentrierrahmen ein Kontaktstecker, insbesondere ein Piercingstecker, einsetzbar.

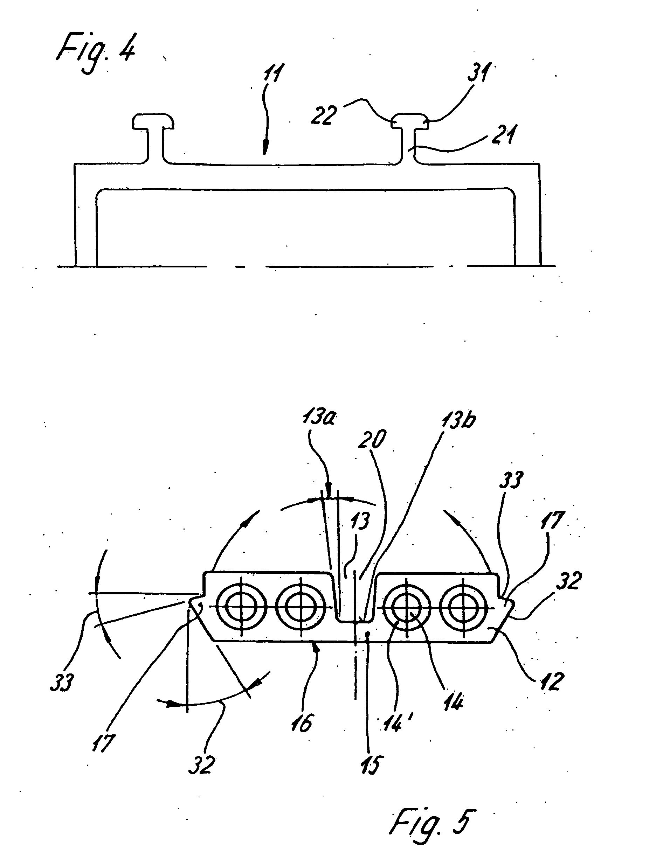

Es bietet sich an, wenn die Kabelnut innerhalb einer umgebenden größeren Nut, insbesondere innerhalb einer Beschlagnut zur Aufnahme von Beschlägen, am Rahmenprofil ausgebildet ist und dass der Zentrierrahmen zum Verrasten an der umgebenden Nut ausgelegt ist. Derart wird die größere, umgebende Nut für das Verrasten des Zentrierrahmens genutzt und die kleinere Kabelnut kann vollständig vom Flachbandkabel ausgefüllt sein. Vorzugsweise wird der Zentrierrahmen dann entsprechend zum Verrasten an der Beschlagnut ausgelegt. Denkbar ist es aber auch, dass der Zentrierrahmen zum Verrasten an der Kabelnut ausgelegt ist, z.B., wenn diese nach Art der Fig. 4 ausgelegt ist. Anstelle verrastender Verbindungen sind auch Klemm- oder Schraubverbindungen zwischen Zentrierrahmen und Profil denkbar, wenn diese auch weniger bevorzugt werden.

Die Kabelnut lässt sich einfach bei der Herstellung des Profils mit anformen bzw. ausbilden, ohne dass hierzu Arbeitsgänge erforderlich wären, die über die sowieso zur Herstellung des Profils erforderlichen Arbeitsgänge hinausgingen.

Die Kabelnut, das Kabel und der zugehörige Zentrierrahmen vereinfachen je für sich und in ihrem Zusammenspiel die Montage erheblich. Besonders deutlich wird dieser Vorteil bei Einsatz der vorgeschlagenen Flachbandkabels, welches einfach in die Kabelnut eingeklipst wird. Denkbar sind aber auch Kabel mit einer von einer Flachbandgeometrie abweichenden Form, so z.B. solche mit leicht ovalem Querschnitt.

Die Erfindung schafft zur Lösung der Aufgabe weiterhin ein Rahmenprofil für einen Blend- oder Flügelrahmen eines Fensters, einer Tür oder einer Fassade mit einer am Außenumfang des Profils angeordnete Kabelnut zur formschlüssigen Aufnahme eines elektrischen Kabels mit wenigstens zwei oder mehr elektrischen Leitern und mit einem an das Profil montierten Stecker mit isolationsdurchstechenden Kontakten zum Kontaktieren der Leiter des Kabels.

Vorzugsweise ist die Kabelnut hinterschnitten ausgelegt und auf das Kabel ist wiederum ein am Profil befestigbarer Zentrierrahmen für das Kabel aufgesetzt.

Der Stecker mit seinen isolationsdurchstechenden bzw. -durchscheidenden Kontakten ist werkzeugfrei schnell und sicher am Profil montierbar und kontaktiert sicher die Leiter des Kabels.

Vorzugsweise sind die isolationsdurchstechenden Kontakte als Piercingkontakte ausgestaltet, da diese kostengünstig herstellbar sind und eine schnelle, werkzeugfrei Kontaktierung erlauben.

Es ist vorteilhaft, wenn der Stecker zum direkten oder indirekten Verrasten an der Kabelnut oder einer sonstigen Nut des Profils ausgelegt ist, da dies das Konzept der weitgehend werkzeugfreien Montage auch auf die Montage des Steckers am Profil ausdehnt und in besonderer Weise mit dem Konzept der isolationsdurchstechenden Kontaktierung harmoniert.

Ergänzt wird dieses Konzept nochmals optimal durch den auf das Kabel aufsetzbaren und am Profil befestigbaren Zentrierrahmen für das Kabel, in den der Stecker einsetzbar ist und/oder eine Ausbildung des Kabel als Flachbandkabel, das mehrere parallel zueinander in einer Ebene angeordnete Leiter bzw. Litzen aufweist. Zweckmäßig ist der Kabelmantel ferner mit einer nutartigen Einkerbung versehen und der Zentrierrahmen weist einen korrespondierenden Steg zum Eingriff in die Einkerbung auf.

Der Zentrierrahmen weist auf diese Weise nach seiner Montage relativ zum Kabel, insbesondere zum bevorzugten Flachbandkabel, eine definierte Position aus und gewährleistet es, die Leiter des Kabels, insbesondere des Flachbandkabels an definierter Stelle sicher mit dem Stecker z.B. mit isolationsdurchstechenden Kontakten kontaktieren zu können. Die Montage wird derart nochmals deutlich vereinfacht.

Die Kabelnut, das Kabel und der Stecker sowie ergänzend vorzugsweise auch der zugehörige Zentrierrahmen vereinfachen je für sich und in ihrem Zusammenspiel die Montage erheblich. Besonders deutlich wird dieser Vorteil bei Einsatz des vorgeschlagenen Flachbandkabels, welches einfach in die Kabelnut eingeklipst wird. Denkbar sind aber auch Kabel mit einer von einer Flachbandgeometrie abweichenden Form, so z.B. solche mit leicht ovalem Querschnitt.

Die Erfindung schafft ferner als Lösung der gestellten Aufgabe ein Rahmenprofil für einen Blend- oder Flügelrahmen eines Fensters, einer Tür oder einer Fassade mit einer am Außenumfang des Profils angeordnete Kabelnut, die ein elektrisches Kabel mit wenigstens zwei oder mehr elektrischen Leitern formschlüssig aufnimmt, und mit einem an das Kabel montierten- bevorzugt verrastbaren - Stecker mit isolationsdurchstechenden Kontakten zum Kontaktieren der Leiter des Kabels.

Der Stecker mit seinen isolationsdurchstechenden bzw. -durchscheidenden Kontakten ist vorzugsweise werkzeugfrei schnell und sicher am Kabel montierbar und kontaktiert sicher die Leiter des Kabels.

Vorzugsweise sind die isolationsdurchstechenden Kontakte als Piercingkontakte ausgestaltet, da diese kostengünstig herstellbar sind und eine schnelle, werkzeugfreie Kontaktierung erlauben.

Es ist vorteilhaft, wenn der Stecker nach dieser Variante zum direkten oder indirekten Verrasten an dem Kabel ausgelegt ist, da dies das Konzept der weitgehend werkzeugfreien Montage auch auf die Montage des Steckers am Profil ausdehnt und in besonderer Weise mit dem Konzept der isolationsdurchstechenden Kontaktierung harmoniert.

Die Erfindung schafft neben den einzelnen Profile auch ganze Fenster-, Tür- oder Fassadenelemente mit derartigen Profilen.

Vorteilhafte Ausgestaltungen sind den Unteransprüchen zu entnehmen.

Nachfolgend wird die Erfindung unter Bezug auf die Zeichnung anhand eines Ausführungsbeispiels näher beschrieben. Es zeigen:
- Fig. 1: einen Teilschnitt eines Fensters;
- Fig. 2 und 3: jeweils leicht zueinander versetzte, vergrößerte Ausschnitte aus Fig. 1 mit und ohne elektrisch leitendes Kabel; und
- Fig. 4: eine weitere Ausführungsform in einem Teilschnitt nach Art der Fig. 2;
- Fig. 5: einen Ansicht des axialen Endes eines erfindungsgemäßen Flachbandkabels;
- Fig. 6: die Anordnung aus Fig. 2 mit einem Zentrierrahmen; und
- Fig. 7: eine Draufsicht auf den Zentrierrahmen der Fig. 6;
- Fig. 8: den Zentrierrahmen aus Fig. 6 und 7 in einer Seitenansicht quer zur Nutlängsrichtung;
- Fig. 9: eine schematische Darstellung der Einbausituation mit Piercingstecker;
- Fig. 10 - 12: verschiedene Ansichten des eines ersten Piercingsteckers mit Kabel; und
- Fig. 13 - 16: verschiedene Ansichten des Unterteils eines ersten Piercingsteckers; und
- Fig. 17 - 19: verschiedene Ansichten eines zweiten Piercingsteckers in seiner Einbausituation und in Einzeldarstellungen;
- Fig. 20: einen dritten Piercingstecker;
- Fig. 21, 22: die Einbausituation im Eckbereich zweier benachbarter Profile nach zwei verschiedenen Varianten.
- Fig. 23: einen Teilschnitt eines weiteren Fensters;
- Fig. 24a-c: verschiedene Ansichten eines Flachbandkabels für das Profil der Fig. 23 nebst aufgesetztem Stecker; und
- Fig. 25: eine alternative Ausführungsform eines Flachbandkabels mit einem weiteren Stecker.

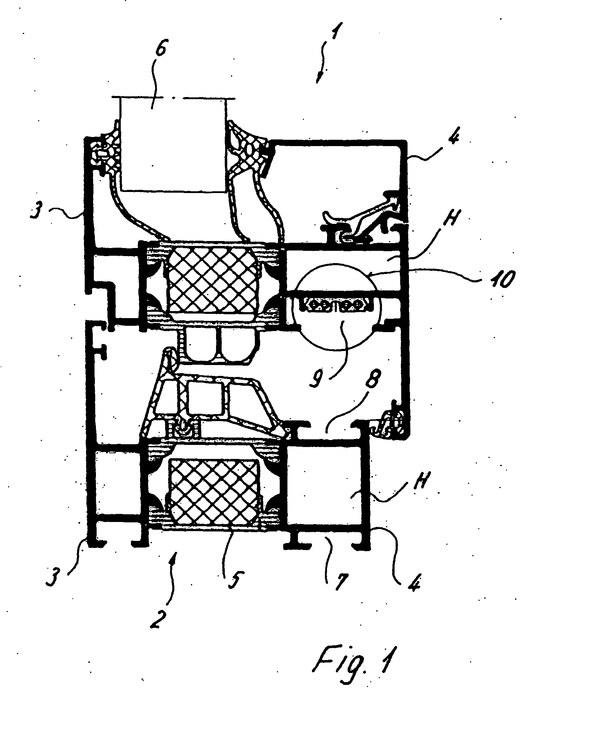

Fig. 1 zeigt einen Teilschnitt eines Fensters, bestehend aus einem Flügelrahmen 1, der beweglich in einem Blendrahmen angeordnet ist. Der Blendrahmen 2 ist z.B. an ein Mauerwerk angebunden oder in eine Fassade eingebunden.

Die Profile des Flügelrahmens 1 bzw. des Blendrahmens sind jeweils als Verbundprofil gefertigt und weisen eine Außenschale 3 und eine Innenschale 4 sowie eine die Au-Benschale 3 mit der Innenschale 4 koppelnde Wärmedämmzone auf, die aus Kunststoff-Isolierstegen 5 besteht.

Die Außenschale 3 und die Innenschale 4 - also die einzelnen Profile des Verbundprofils - sind jeweils als Metallprofile gefertigt und bestehen z.B. aus einem Leichtmetallwerkstoff oder Stahl. Es ist auch denkbar, sie aus Holz oder Kunststoff zu fertigen. Z.B. in wärmeren Klimazonen bzw. im Innenausbau von Gebäuden ist es zudem denkbar, auf eine Verbundbauweise mit einem Isoliersteg 5 zu verzichten. In den Flügelrahmen ist eine Isolierglasscheibe 6 eingesetzt.

Die einzelnen Profile 3, 4 des Flügelrahmens 1 und des Blendrahmens 2 weisen jeweils Hohlkammern H auf sowie an ihrem Außenumfang verschiedene Nuten, so insbesondere jeweils Nuten 8, 9 zur Aufnahme von korrespondierenden Funktionselementen wie Beschlagteilen oder Antrieben z.B. zum Verriegeln des Flügels am Blendrahmen oder zum Öffnen und/oder Schließen des Flügels.

Die Beschlagnuten sind insbesondere an den einander zugewandten Seiten des Blend-und des Flügelrahmens ausgebildet. Eine Blendrahmennut 7 dient zur formschlüssigen Verbindung mit angrenzenden Bauteilen (Fassade, weitere Fenster, Türen etc.) oder zum Wandanschluss. Die Hohlkammern H dienen insbesondere zur Aufnahme von Eckverbindern und zur Wärmedämmung.

Das Profil besteht vorzugsweise aus Metall, insbesondere Leichtmetall. Theoretisch kann es auch aus Holz oder Kunststoff bestehen.

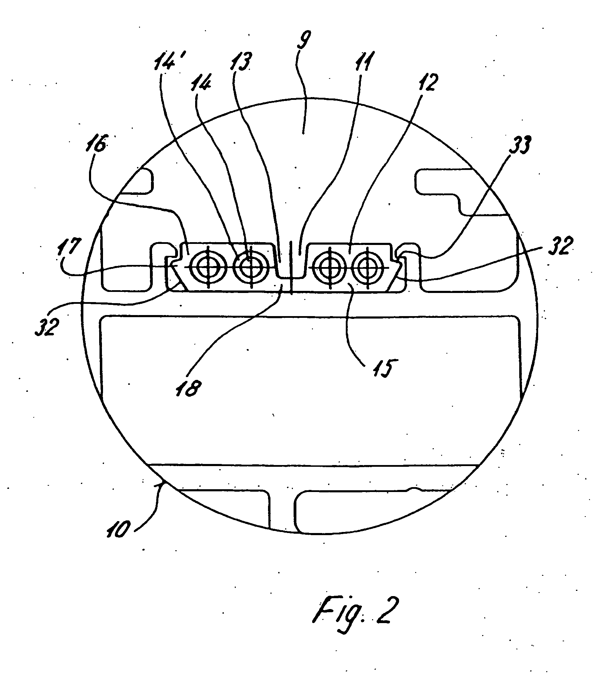

Fig. 2 zeigt den Flügelausschnitt 10 aus Fig. 1.

Gut zu erkennen ist, dass am Außenumfang des Flügelrahmenprofils wenigstens eine sich vorzugsweise parallel zum Profil erstreckende Kabelnut 11 zur form- und kraftschlüssigen Aufnahme eines elektrischen Kabels 12 angeordnet ist. Diese Kabelnut 11 ist hier in bevorzugter Ausgestaltung am Grund der Beschlagnut 9 des Flügelrahmenprofils 1 angeordnet, da das Flachbandkabel derart von außen nicht sichtbar und platzsparend unter Beschlagteilen angeordnet ist. Denkbar ist aber auch eine Anordnung an beliebiger anderer Stelle des Außenumfangs des Profils.

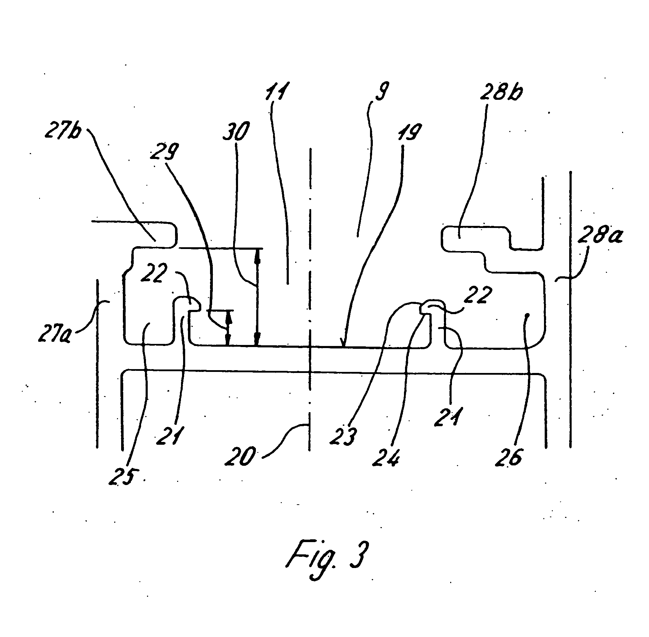

Das Flachbandkabel 12 (siehe Fig. 3 bis 5) ist in die Kabelnut 11 einfach von außen einklipsbar. Die sich parallel zum Profil an dessen Außenseite erstreckenden "Kabelnut 11 in der Nut 9" bietet den Vorteil, dass das Flachbandkabel geschützt und verdeckt liegt und die Optik des Fensters nicht stört, ohne dass sich die Montage der Beschläge in deren Nut 9 erschwert oder dass das Flachbandkabel 12 bei dieser Montage stört.

Denkbar wäre es auch, eine entsprechende Kabelnut am Blendrahmen vorzusehen (hier nicht dargestellt) oder in einer anderen Nut des Fensters oder einer Nut direkt am Außenumfang, wie dieses für Fassaden bevorzugt wird, da hier sonst nur noch der Glasfalz zur Verfügung steht, was aber aufgrund von auftretender Feuchtigkeit relativ nachteilig ist. Bevorzugt wird aber die kompakte Anordnung der Kabelnut 11 in der Beschlagnut 9 des Innenschale 4 des Flügelrahmenprofils 1, insbesondere in einem dem Blendrahmen direkt gegenüberliegenden Spaltbereich.

Das Flügelrahmenprofil 1 kann je nach Auslegung zur Herstellung eines Drehfensters, eines Kippfensters, eine Dreh-/Kippfenster, eines Schiebefensters oder z.B. einer Balkonverglasung genutzt werden. Alternativ können auch Türen oder Fassadenelemente gefertigt werden, wobei die letzteren gemäß des Sprachgebrauches dieser Schrift auch Lichtdachelemente umfassen.

Die Kabelnut 11 zur Aufnahme eines elektrisch leitenden Kabels ist stets vorteilhaft, wenn es darum geht, Funktionselemente am Fenster wie z.B. Verriegelungselemente, Sensoren, Leuchtmittel wie z.B. Leuchtdioden oder einen Antrieb zum Öffnen und Schließen mit Energie zu versorgen.

Dazu wird das Flachbandkabel 12 z.B. vom Blendrahmen an einer Übergangsstelle zum Flügelrahmen verlegt und dann am Außenumfang des Flügelrahmenprofils zu den anzusteuernden oder mit Energie zu versorgenden Funktionselementen wie einem Antrieb oder einer elektrischen Verriegelung geführt.

Das Flachbandkabel 12 weist hier beispielhaft vier parallel zueinander in einer Ebene angeordnete Leiter bzw. Litzen 14 auf, die jeweils eine Isolierung 14' aufweisen und die in den Mantel 15 bzw. Grundkörper 16 des Flachbandkabels 12 eingebettet sind und die von außen in der Nut z.B. mittels Piercingkontakten kontaktierbar sind.

Der Kabelmantel 15 bzw. Grundkörper 16 ist hier zwischen den zwei mittleren zwei Leitern mit einer nutartigen Einkerbung 13 versehen, die parallel zu den Leitern 14 in deren Längserstreckung verläuft und die es in vorteilhafter Weise ermöglicht, das Flachbandkabel in der Nut auszurichten bzw. zu zentrieren, indem ein entsprechender Steckkontakt auf die Nut gesetzt wird, der einen Zentrieransatz aufweist, der in die Einkerbung 13 eingreift (hier nicht zu erkennen).

Die Einkerbung 13 hat einen konischen Querschnitt und durchsetzt das Flachbandkabel 12 fast vollständig (z.B. um ca. 60 -70%), so dass es beim Einstecken in die Kabelnut 11 gebogen bzw. zusammengedrückt werden kann, bis es sich in der Kabelnut 11 befindet, wo es sich wieder aufweitet. Die Einkerbung dient auch zur Zentrierung mittels einer korrespondierenden Zentriervorrichtung (Rahmen, hier nicht dargestellt), so dass die Litzen genau kontaktierbar sind.

Das Flachbandkabel 12 ist elastisch ausgebildet. Insbesondere der Mantel 15, der einen Grundkörper 16 ausbildet, besteht aus flexiblem Material, z.B. aus EPDM , um das Flachbandkabel gut um enge Ecken am Flügelrahmen biegen bzw. legen zu können. Dabei kann die Kabelnut 11 auch am oberen und/oder unteren Profil und/oder gegenüberliegenden Profil des Flügelrahmens ausgebildet sein, also ganz oder teilweise umlaufend (hier wiederum nicht zu erkennen).

Das Flachbandkabel weist hier beispielhaft vier litzenartige Leiter 14 auf. Denkbar sind aber auch Ausführungen mit mehr oder weniger Leitern, falls z.B. nur eine Stromversorgung zum Versorgen eines elektrischen Antriebes notwendig ist oder die Versorgung vieler Antriebe notwendig ist. Die Lagerhaltung ist mit diesem Flachbandkabel sehr einfach.

Das Flachbandkabel 12 weist seitliche Nasen 17 auf, die im montierten Zustand elastisch hinter Stege 22 der Kabelnut 11 greifen.

Diese Nasen weisen wiederum an ihren in Einführrichtung in die Nut weisenden Seite Einführschrägen 32 auf, die das Einführen in die Kabelnut 11 vereinfachen. Weitere Schrägen 33 an der gegenüberliegenden Seite der Nasen vereinfachen dagegen die Demontage des Kabels z.B. im Reparaturfall oder dgl.

Wie in Fig. 3 zu erkennen, ist die Kabelnut 11 vollständig innerhalb in der Beschlagnut 9 angeordnet und weist eine Symmetrieachse 20 auf. Sie liegt aber in der Nut 9 leicht seitlich versetzt mittig unter deren Öffnung.

Beide Nuten 9, 11 weisen zudem ein- und denselben Boden bzw. Grund 19 auf, aus dem seitliche Stege 21 für die Kabelnut 11 winklig, insbesondere rechtwinklig vorstehen .

An den freien Enden dieser Stege sind die zueinander gerichteten Stege 22 ausgebildet, die jeweils Hinterschnitte zum Verrasten des Flachkabels 12 ausbilden.

Die Stege 22 sind zur Vereinfachung der Montage des Flachbandkabels 12 außen bzw. zur Nutöffnungsseite hin mit Schrägen 23 versehen. Die innere Stegfläche 24 dient zum Hintergreifen des Flachkabels 12. Das Flachkabel füllt die Nut nahezu vollständig aus und schließt diese mit einer im wesentlichen ebenen Oberfläche ab.

Die Nutstege 22 bilden in der Beschlagnut 9 seitliche Kammern 25 und 26 aus. Diese Kammern 25 und 26 sind unterschiedlich groß, wodurch sich ein unsymmetrischer Aufbau in der Beschlagnut ergibt. In den Kammern können die Funktionselemente gehalten sein.

Die Beschlagnut 9 und/oder die Kabelnut 11 können umlaufend an jedem der typischerweise vier Rahmenprofile des Flügelrahmens ausgebildet sein. Das Flachkabel 12 kann dabei in einfacher Weise als Auflagefläche für einen Beschlag oder ein sonstiges Funktionselement in der Nut genutzt werden (hier nicht zu erkennen). Die Anordnung der Kabelnut 11 in der Beschlagnut 9 ist besonders vorteilhaft aber nicht zwingend.

Die Beschlagnut 9 weist seitliche Wandungen 27a, 28a sowie nach innen gerichtete Stege 27b, 28b auf, die deutlich dicker und länger sind als die Stege der Kabelnut 11, was zeigt, dass die Stege 21, 22 der Kabelnut 11, die nur das Flachbandkabel halten und ansonsten keine tragende Funktion übernehmen müssen, materialsparend ausgelegt werden können. Beschläge und Flachbandkabel können kompakt in dem direkt darüber liegenden, verbleibenden Freiraum der Beschlagnut 9 angeordnet werden, ohne dass das Flachbandkabel die Montage der Beschläge behindert.

Die Höhen 29 und 30 der Nutstege der Nuten 9 und 11 weisen ein Verhältnis von hier 1 / 3 auf, was genügend Platz in der Beschlagnut 9 zur Anordnung der eigentlichen Beschlagteile und/oder sonstiger Funktionselemente belässt.

Fig. 4 zeigt eine Ausführungsform, bei der auf der den Stegen 22 gegenüberliegenden Seite der Kabelnutstege 21 weitere Stege 31 angeformt sind, an denen ein Steckerelement zur Kontaktierung der Leiter des Kabels 12 verrastbar ist (hier nicht dargestellt). Diese Variante wird bevorzugt, wenn die Kabelnut 11 nicht innerhalb einer Beschlagnut oder dgl. angeordnet ist. Alternativ kann die Verrastung des Steckers auch in der Beschlagnut an deren Stegen 27, 28 erfolgen.

Das Flachbandkabel 12 und die Kabelnut 11 sind derart ausgelegt, dass das Flachbandkabel zwar sicher in der Kabelnut 11 verrastet wird, aber in derselben leicht seitlich bewegbar bleibt. Dieses Spiel ermöglicht es, dass Flachbandkabel in der Nut auszurichten, beispielsweise mittels eines Rahmens, auf den dann ein Stecker aufgesetzt wird oder z.B. mittels des Steckers selbst.

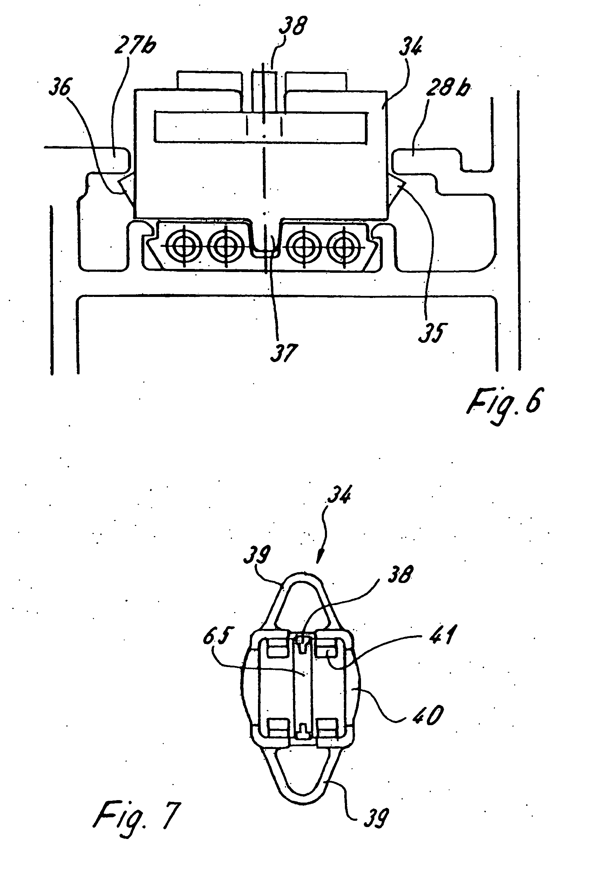

Fig. 6 zeigt die Anordnung aus Fig. 2 mit einem derartigen Zentrierrahmen 34. Dieser Zentrierrahmen 34 ist in der Beschlagnut 9 verrastbar. Hier weist er seitliche Rastnasen (hier Rastbögen) 35, 36 auf, welche beim Eindrücken des Rahmen in die Beschlagnut 9 rastend die nach innen gerichteten Stege 27b, 28b hintergreifen, so dass der Rahmen an der Beschlagnut 9 fixiert ist.

An seiner zum Flachkabel weisenden Seite weist der Zentrierrahmen einen Steg 37 auf, der eine zur Einkerbung 13 korrespondierende - hier konische - Formgebung aufweist.

Wird der Zentrierrahmen 34 in die Beschlagnut 9 gesetzt, greift der Steg 37 in die Einkerbung 13. Damit ist er relativ zum Flachbandkabel exakt positioniert und es kann ein elektrischer Stecker (hier nicht dargestellt) auf den Rahmen aufgesetzt werden. Hierzu eignen sich z.B. Stecker mit isolationsdurchstechenden bzw. -schneidenden Kontakten (z.B. Piercingkontakte; hier nicht dargestellt), die einer präzisen Ausrichtung bedürfen, damit sie die leitenden Adern exakt kontaktieren. Diese Ausrichtung gewährleistet der Zentrierrahmen 34.

Der Zentrierrahmen 34 (Fig. 7) selbst weist zur Führung des (nicht dargestellten) zugehörigen Steckers Führungsstege 38 aus, an denen der Stecker in definierter Position in den Zentrierrahmen 34 führbar ist.

Die Anordnung bietet den großen Vorteil, dass der Stecker zur eigentlichen Kontaktierung des Flachbandkabels 12 mit seinen isolationsdurchstechenden Kontakten nicht direkt in das Kabel zu stechen ist sondern dass zunächst ein weiteres Bauteil, nämlich der Zentrierrahmen 34, relativ zum Flachbandkabel 12 genau ausgerichtet wird, der dann den eigentlichen Stecker exakt führt und derart eine präzise Kontaktierung der Leitungsadern des Flachbandkabels 12 ermöglicht.

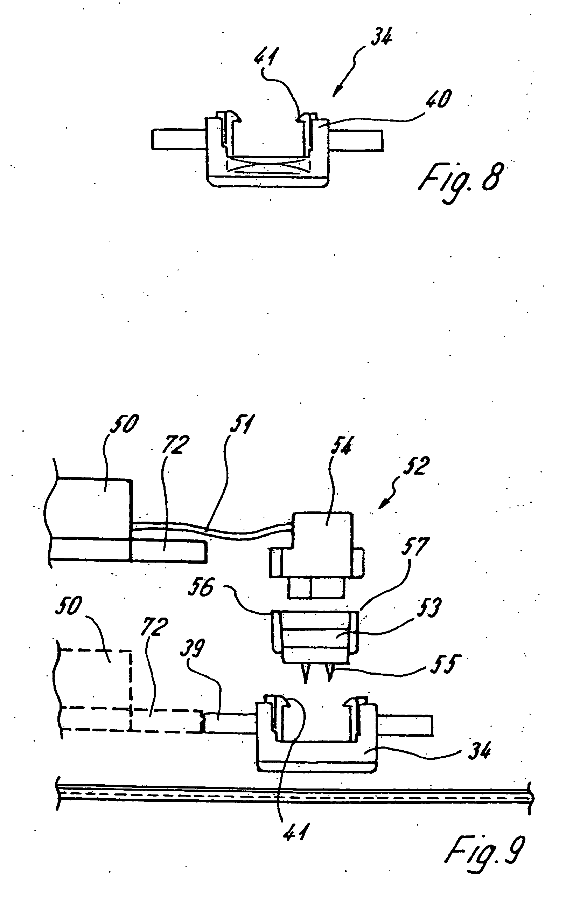

Seitliche Abstandshalter 39 (hier nach Art federnder Bögen) am Zentrierrahmen 34, die sich in Nutlängsrichtung erstrecken, ermöglichen es, den Kontaktierungsbereich am Kabel präzise zu einem benachbarten (elektrischen) Bauteil zu beabstanden. Das Bauteil kann analoge Abstandshalter 72 aufweisen (Fig. 9).

Aus der Ansichten der Fig. 7 und 8 erschließt sich die Rahmengeometrie des Zentrierrahmens 34 mit einem umlaufenden Rahmen 40, in den ein Stecker oder dgl. einsetzbar ist. Mittels Rasthaken 41 kann dieser Stecker auf einfache Weise formschlüssig und sicher am Rahmen verrastet werden.

Denkbar ist es auch, mehrere der Zentrierrahmen 34 in Nutlängsrichtung einstückig miteinander zu verbinden, um mehrere Stecker am Flachkabel 12 anzuordnen (hier nicht dargestellt) oder über Eck zu führen. In diesem Fall wären die Zentrierrahmen z.B. über Filmscharniere miteinander verbunden (hier nicht dargestellt).

Alternativ ist es auch denkbar, den Zentrierrahmen 34 so auszubilden, dass er nicht an der Beschlagnut 9 sondern an der Kabelnut 11 selbst (siehe z.B. Fig. 4) oder an einer anderen umgebenden Nut verrastet wird (hier ebenfalls nicht dargestellt).

Fig. 9 zeigt ein stromverbrauchendes Bauteil 50 - z.B. eine elektrische Verriegelungsvorrichtung oder einen Antrieb oder einen Sensor oder eine Beleuchtungseinrichtung oder dgl. - das hier nur teilweise dargestellt ist und mit elektrischer Energie zu versorgen und ggf. anzusteuern ist.

An das elektrische Bauteil 50 ist das eine Ende eines Kabels 51 angeschlossen, an dessen weiteres Ende ein Piercingstecker 52 angeschlossen ist.

Der Piercingstecker 52 weist hier zwei Gehäuseteile 53, 54 auf, die über Formschluss miteinander verbindbar sind. Diese Gehäuseteile werden entsprechend der Darstellung der Fig. 9 nachfolgend als Steckeroberteil 54 und Steckerunterteil 53 bezeichnet, ohne dass dies einschränkend zu verstehen ist. Am Steckerunterteil 53 bzw. an der dem Kabel 12 in Montagestellung zugewandten Seite des Piercingsteckers 52 sind nadelartige isolationsdurchstechende Kontakte 55 angeordnet bzw. ausgebildet, die in Kontaktstellung mit dem Steckeroberteil 54 über dieses mit den Leitern des Kabels 41 verbunden sind.

Der Piercingstecker 52 wird mit den Piercingkontakten 55 voran auf den Zentrierrahmen aufgesetzt, so dass die Piercingkontakte 55 den Kabelmantel 15 und die einzelnen Leiterisolierungen durchdringen und die einzelnen Leitungsadern kontaktieren.

Der Zentrierrahmen 34 sorgt auf einfache Weise für die exakte Ausrichtung des Piercingsteckers 52 relativ zum Flachbandkabel 12 und für eine exakte Kontaktierung desselben. Derart kann die Montage der elektrischen Bauelemente schnell und auf einfache Weise nahezu werkzeugfrei durchgeführt werden.

Am Zentrierrahmen 34 wird das Unterteil 53 des Piercingsteckers 52 mittels der Rasthaken 41 der Zentrierrahmens 34 gehalten, die beim Aufstecken des Piercingsteckers 52 entsprechende am Piercingstecker hintergreifen.

Bei der Montage wird vorzugsweise zunächst das Steckerunterteil 53 allein in den Zentrierrahmen 34 gesteckt, wo es die Leiter des Flachbandkabels 12 kontaktiert und dann am Rahmen verrastet wird. Dies hat den Vorteil, dass das Kabel 51 am Steckeroberteil 54 die Montage nicht behindert.

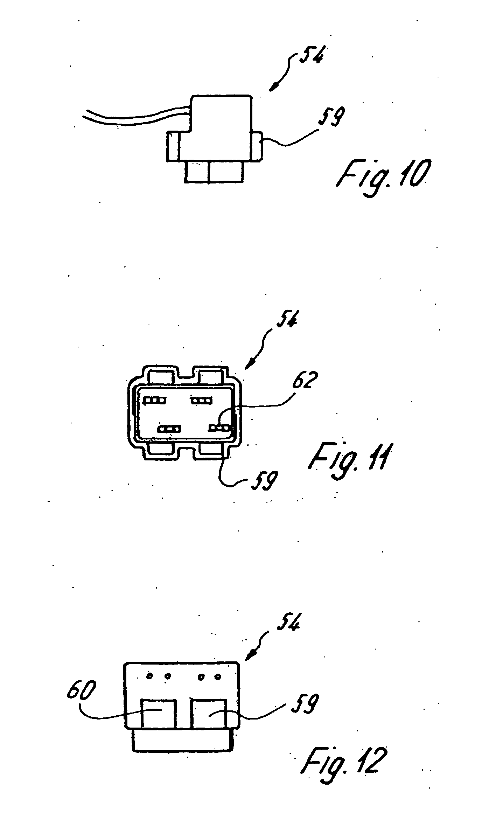

Das Steckeroberteil und das Steckerunterteil 53, 54 sind separat in den Fig. 10 bis 16 dargestellt.

Zwischen den Stegen 56, 57 des Steckerunterteils 53 ist eine Art Nut 58 ausgebildet, in welche bei der Montage die Führungsstege 38 des Zentrierrahmens 34 eingreifen, so dass das Steckerunterteil 53 in definierter Position in den Zentrierrahmen 34 geführt wird.

Sodann wird das Steckeroberteil 54 mit dem Kabel 51 auf das Steckerunterteil 53 aufgerastet. Dabei übergreifen kleine Abdeckhauben 59 die Stege 56, 57 am Steckerunterteil 53. Die Abdeckhauben 59 sind abgerundet ausgebildet, was die Handhabung erleichtert und zu einem vorteilhaften Design führt.

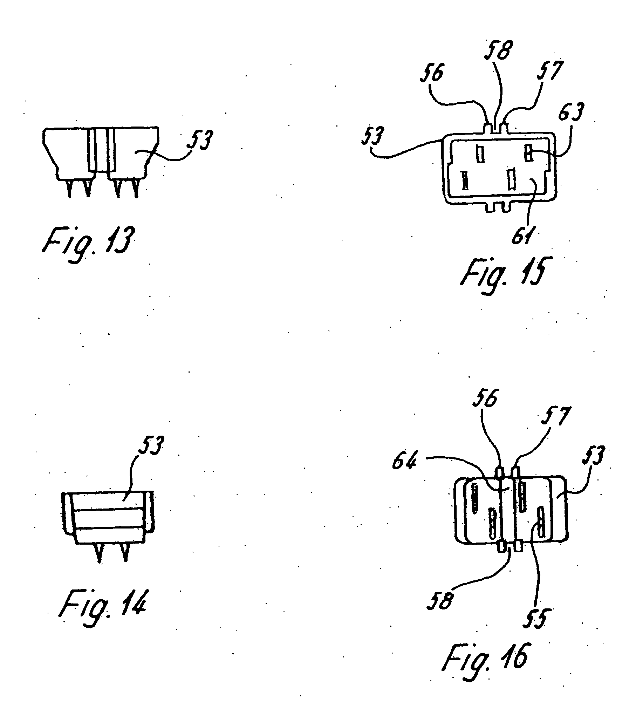

Ein Schaft 60 (Fig. 10) wird in eine Aufnahme 61 (Fig. 15, 16) des Steckerunterteils geführt. Kontakte 62 (z.B. Stifte; Fig. 11) am Steckeroberteil 54, die mit den Adern des Kabels 51 verbunden sind, kontaktieren die vom Kabel 12 abgewandten - hier nadelkopfartigen - Bereiche 63 (Fig. 15) der Piercingkontakte 55 (Fig. 16). Der Schaft 60 lässt sich je nach Einbausituation in zwei um 180° verschiedenen Positionen (Rechts; Links) montieren.

Eine untere Nut 64 am Steckerunterteil 53 korrespondiert mit einem oberen Zentriersteg 65 am Zentrierrahmen 34.

Der Kabelausgang aus dem Stecker kann als Bohrung, ggf. mit einer Abdichtung, ausgestaltet werden.

Die vorstehend beschriebene Anordnung bietet den großen Vorteil, dass der Stecker zur eigentlichen Kontaktierung des Flachbandkabels 12 mit seinen isolationsdurchstechenden Kontakten nicht direkt in das Kabel 12 zu stechen ist sondern dass zunächst ein weiteres Bauteil, nämlich der Zentrierrahmen 34, relativ zum Flachbandkabel 12 genau ausgerichtet wird, der dann den eigentlichen Stecker exakt führt und derart eine präzise Kontaktierung der Leitungsadern des Flachbandkabels 12 ermöglicht.

Die Anordnung von Rahmen 34 und Stecker 52 kann an quasi jeder beliebigen Stelle in der Längserstreckungsrichtung des Profils erfolgen. Die Abstandshalter 39 am Zentrierrahmen 34 sorgen für eine präzise Montageposition relativ zum elektrischen Bauteil, so das vorkonfektionierte Kabellängen verwendbar sind. Montagefehler werden sicher vermieden.

Denkbar wären auch Auslegungen von Zentrierrahmen und Stecker (insbesondere dem Steckerunterteil) in einteiliger Ausgestaltung, wobei diese z.B. über Federelemente, bewegliche Stege oder dgl. verbunden wären (hier nicht dargestellt).

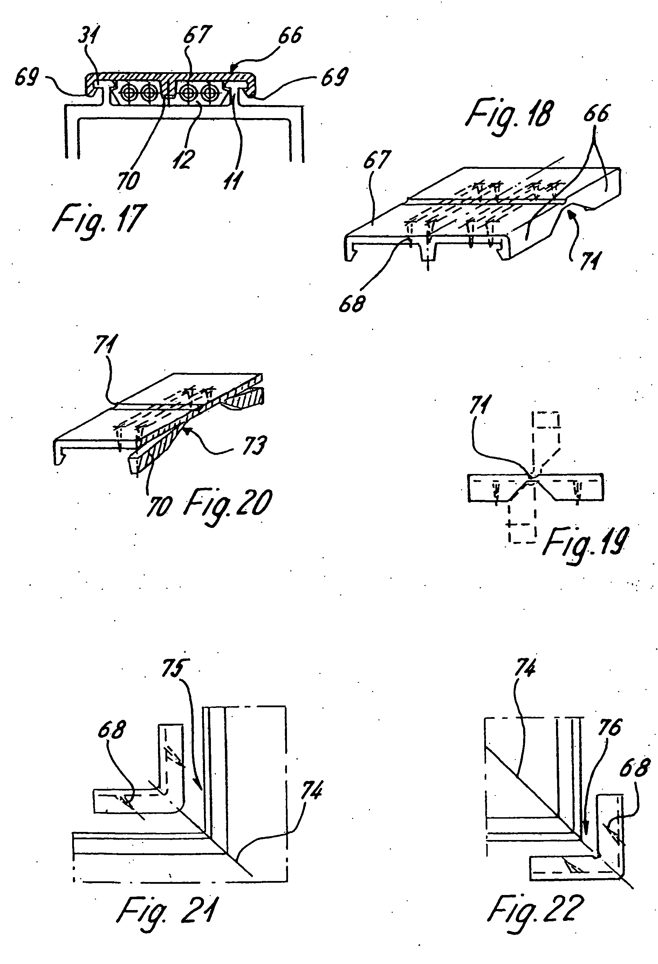

Eine alternative Ausgestaltung zeigen die Fig. 17 bis 19. Hier weist ein Piercingstecker 66 mit einem Gehäuse 67 und Piercingkontakten 68 direkt eine Rastkontur 69 mit Aufsatzschrägen zum Verrasten an einer Nut des Rahmens, hier an den Stegen 31 der Kabelnut 11, auf.

Ein Zentriersteg 70 richtet vor dem Eindringen der Piercingkontakte 68 in den Kabelmantel 15 zunächst das Kabel an dessen Einkerbung 13 in der Nut - hier der Kabelnut 11 - relativ zum Piercingstecker 65 aus, bevor die Piercingkontakte 68 in das Flachbandkabel 12 eindringen und dessen Leiter kontaktieren.

Besonders vorteilhaft ist dazu der Zentriersteg 70 federnd ausgelegt bzw. über Federelemente 73 am Gehäuse 67 gelagert, so dass zunächst die Ausrichtung erfolgt und dann die Federelemente komprimiert werden (Fig. 20).

Die Rastkonturen 69 hintergreifen sodann die seitlichen Stege 22 an der Kabelnut 11. Diese Variante bietet sich z.B. an, wenn die Kabelnut 11 nicht innerhalb einer weiteren umgebenden Nut angeordnet wird.

Fig. 18 und 19 veranschaulichen, dass es möglich ist, zwei der Piercingstecker einstückig über ein Filmscharnier 71 miteinander zu verbinden. Werden die Piercingkontakte 68 entsprechend winklig gestellt (um 45° nach innen oder außen), kann mit Hilfe des Filmscharniers 71 auch eine Eckverbindung zwischen zwei Flachkabeln an zwei benachbarten Rahmenprofilen eines Fensters realisiert werden.

Fig. 21 und 22 zeigen derartige - hier rechtwinklige - Kabelverbindungen für die Innenecke 75 oder die Außenecke 76 eines Rahmens oder eines Profistoßes an einer Fassade. Hierbei sind die Piercingkontakte parallel zur Winkelhalbierenden (Gehrungsebene) 74 ausgerichtet. Der "Piercingdoppelstecket" wird in diesem Fall innen oder außen an die Ecke gesetzt, wobei die Piercingkontakte 68 entsprechend nach innen oder außen winklig ausgerichtet sind.

Das Filmscharnier könnte auch länger ausgestaltet werden oder gar durch eine Art vorkonfektionierte Kabelverbindung ersetzt werden. In diesem Falle wäre ein Schrägstellen der Piercingkontakte 68 nicht notwendig.

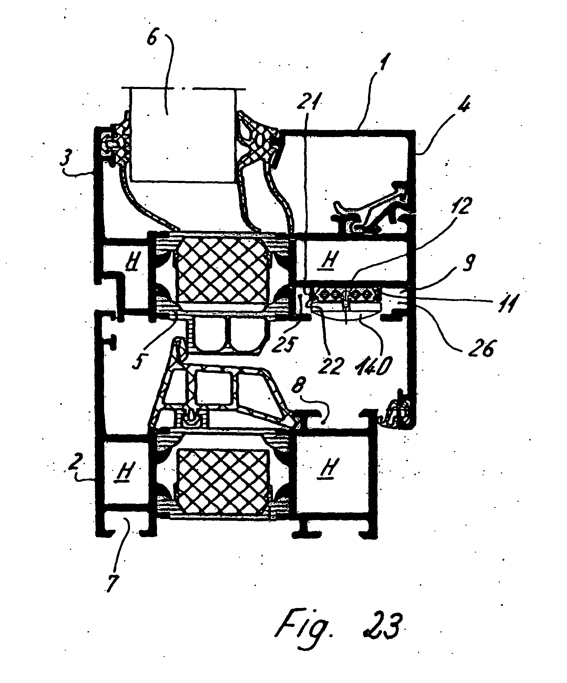

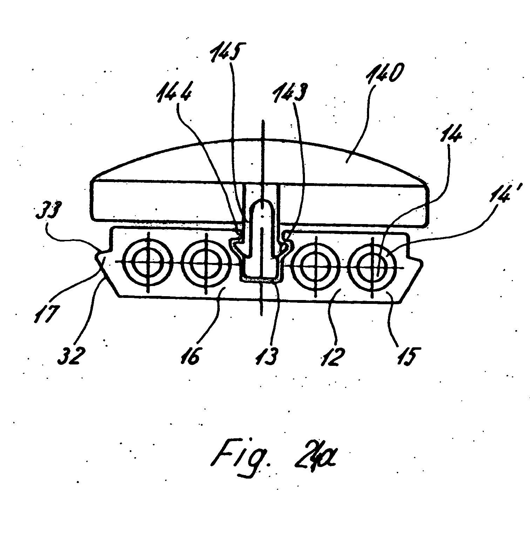

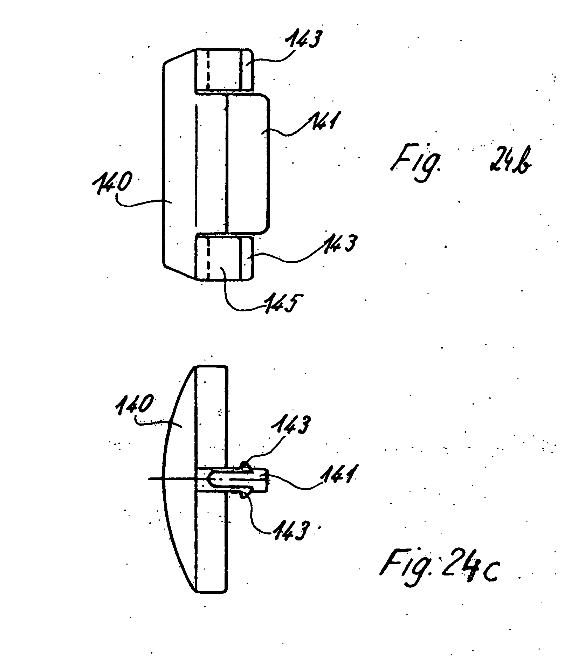

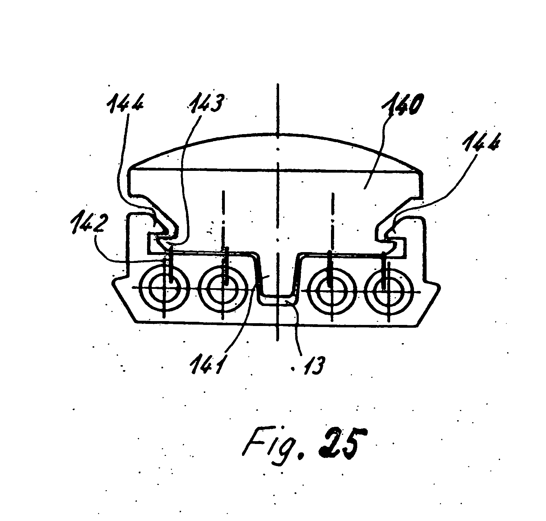

Fig. 23 ähnelt von ihrem Aufbau her Fig. 1. Der Kabelmantel 15 bzw. Grundkörper 16 nach Fig. 23 bis 25 ist wiederum zwischen den zwei mittleren zwei Leitern mit einer nutartigen Einkerbung bzw. Zentriernut 13 versehen, die parallel zu den Leitern 14 in deren Längserstreckung verläuft (siehe insbesondere auch Fig. 3) und die es in vorteilhafter Weise ermöglicht, das Flachbandkabel in der Nut auszurichten bzw. zu zentrieren, indem ein entsprechender Stecker bzw. ein Steckerteil 140 auf die Nut gesetzt wird, das einen Zentrieransatz 141 (Fig. 25, Fig. 24b) aufweist, der in die Einkerbung 13 eingreift. Der Zentrieransatz 141 hat eine derartige Erstreckung, dass er zunächst das Kabel und Stecker relativ zueinander ausrichtet, bevor die Kontaktierung der Leitungsadern über in Fig. 25 schematisch dargestellte isolationsdurchstechende bzw. - schneidende Kontakte, insbesondere Piercingkontakte 142 erfolgt (Fig. 24).

Beschläge und Flachbandkabel 12 können kompakt in dem Freiraum der Beschlagnut 9 angeordnet werden, ohne dass das Flachbandkabel die Montage der Beschläge behindert. Es verbleibt genügend Platz in der Beschlagnut 9 zur Anordnung der eigentlichen Beschlagteile und/oder sonstiger Funktionselemente.

Das Flachbandkabel 12 und die Kabelnut 11 sind wiederum derart ausgelegt, dass das Flachbandkabel 12 zwar sicher in der Kabelnut 11 verrastet wird, aber in derselben leicht seitlich bewegbar bleibt. Dieses Spiel ermöglicht es, das Flachbandkabel 12 in der Kabelnut 11 auszurichten.

An seiner zum Flachkabel 12 weisenden Seite weist der Stecker 140 der Fig. 24 und 25 jeweils den Zentriersteg 141 auf. Korrespondierende Rastmittel 143, 144 an dem Flachbandkabel 12 und dem Stecker 140 verrasten den Stecker 140 unverlierbar am Flachbandkabel 12. Alternativ wäre auch eine andere Art der Montage bzw. Befestigung zur Sicherung des Steckers 140 denkbar, so ein Klemmsitz des Steckers am Flachbandkabel 12 (hier nicht zu erkennen).

Die Piercingkontakte 142 kontaktieren die Leiter (hier nur schematisch dargestellt). Rastmittel 143, 144, Zentrieransatz 141 und Piercingkontakte 142 sind vorzugsweise derart aufeinander abzustimmen, dass zunächst die Ausrichtung am Zentrieransatz 141, dann die Kontaktierung und schließlich die Verrastung erfolgt (hier nicht dargestellt).

Nach Fig. 25 sind die Rastmittel 143, 144 (Haken und Ausnehmungen) (relativ zur Flachkabeloberfläche) oberhalb des Zentriersteges 141 vorgesehen.

Nach Fig. 24 wird dagegen in axialer Richtung des Steckerteils bzw. des Flachbandkabels der Zentriersteg 141 abschnittsweise durch Raststege 145 mit den Rastmitteln 143 ersetzt, die mit korrespondierenden Rastmitteln 144 (Hinterschnitte 144 in der Einkerbung) am Flachbandkabel zusammenwirken.

Auch die Varianten der Fig. 24 und 25 sichern eine leichte Montage bei geschützter Anordnung von Kabel und Stecker 140 in der Beschlagnut 9.

### Bezugszeichen

- Flügelrahmen: 1
- Blendrahmen: 2
- Kunststoff Isolierstege: 5
- Isolierglasscheibe: 6
- Blendrahmennut: 7
- Beschlagnuten: 8, 9
- Flügelausschnitt: 10
- Kabelnut: 11
- Kabels: 12
- Einkerbung: 13
- Leiter bzw. Litzen: 14
- Kabelmantel: 15
- Grundkörper: 16
- Rastnasen: 17
- Grund: 18, 19
- Symmetrieachse: 20
- Begrenzungsstege: 21
- Stege: 22
- Schrägen: 23
- Stegfläche: 24
- Kammern: 25 und 26
- Stege: 27a,b und 28a,b
- Höhen: 29 und 30
- Stege: 31
- Einführschrägen: 32
- Schrägen: 33
- Zentrierrahmen: 34
- Rastnasen: 35, 36
- Steg: 37
- Führungsstege: 38
- Abstandshalter: 39

- Rahmen: 40
- Rasthaken: 41
- Bauteil: 50
- Kabel: 51
- Piercingstecker: 52
- Gehäuseteile: 53,54
- Piercingkontakte: 55
- Rastkonturen: 56, 57
- Nut: 58
- Abdeckhauben: 59
- Schaft: 60
- Aufnahme: 61
- Kontakte: 62
- Kontaktbereiche: 63
- Nut: 64
- Zentriersteg: 65
- Piercingstecker: 66
- Gehäuse: 67
- Piercingkontakten: 68
- Rastkontur: 69

- Zentriersteg: 70
- Filmscharnier: 71
- Abstandshalter: 72
- Federelemente: 73
- Gehrungsebene: 74
- Innenecke: 75
- Außenecke: 76
- Steckerteil: 140
- Zentriersteg: 141
- Kontakte: 142
- Rastmittel: 143, 144
- Hohlkammern: H

## Patentansprüche

1. Rahmenprofil (1, 2, 3, 4) für einen Blend- oder Flügelrahmen eines Fensters, einer Tür oder einer Fassade mit einer am Außenumfang des Profils angeordneten, insbesondere hinterschnittenen Kabelnut (11) zur formschlüssigen Aufnahme eines elektrischen Kabels (12) mit zwei oder mehr elektrischen Leitern (14), **gekennzeichnet durch** einen auf das Kabel (12) aufsetzbaren und am Profil befestigten Zentrierrahmen (34) für das Kabel (12).

2. Rahmenprofil nach Anspruch 1, **dadurch gekennzeichnet, dass** das Kabel als Flachbandkabel (12) ausgebildet ist, das mehrere parallel zueinander in einer Ebene angeordnete Leiter bzw. Litzen (14) aufweist.

3. Rahmenprofil nach Anspruch 1 oder 2, **dadurch gekennzeichnet, dass** der Kabelmantel (15) mit einer nutartigen Einkerbung (13) versehen ist und dass der Zentrierrahmen einen korrespondierenden Steg (37) zum Eingriff in die Einkerbung (13) aufweist.

4. Rahmenprofil nach Anspruch 3, **dadurch gekennzeichnet, dass** die Einkerbung (13) und der Steg (37) parallel zu den Leitern (14) verlaufen.

5. Rahmenprofil nach einem der vorstehenden Ansprüche, **dadurch gekennzeichnet, dass** die Einkerbung (13) und der Steg (37) korrespondierende, sich konisch verjüngende Querschnitte aufweisen.

6. Rahmenprofil nach einem der vorstehenden Ansprüche, **dadurch gekennzeichnet, dass** in den Zentrierrahmen (34) ein Kontaktstecker, insbesondere ein Piercingstecker, einsetzbar ist.

7. Rahmenprofil nach einem der vorstehenden Ansprüche, **dadurch gekennzeichnet, dass** die Kabelnut(11) innerhalb einer umgebenden größeren Nut (9), insbesondere innerhalb einer Beschlagnut (9) zur Aufnahme von Beschlägen, am Rahmenprofil ausgebildet ist und dass der Zentrierrahmen zum Verrasten an der umgebenden Nut ausgelegt ist.

8. Rahmenprofil nach einem der vorstehenden Ansprüche, **dadurch gekennzeichnet, dass** der Zentrierrahmen (34) zum Verrasten an der Beschlagnut (9) ausgelegt ist.

9. Rahmenprofil nach einem der vorstehenden Ansprüche, **dadurch gekennzeichnet, dass** der Zentrierrahmen (34) zum Verrasten an der Kabelnut (11) ausgelegt ist.

10. Rahmenprofil nach einem der vorstehenden Ansprüche, **dadurch gekennzeichnet, dass** der Zentrierrahmen (34) an das Profil anschraubbar ist.

11. Rahmenprofil nach einem der vorstehenden Ansprüche, **dadurch gekennzeichnet, dass** das Flachbandkabel (12) seitliche Nasen (17) aufweist, die im montierten Zustand elastisch hinter Stege (22) der Kabelnut (11) greifen.

12. Rahmenprofil nach einem der vorstehenden Ansprüche, **dadurch gekennzeichnet, dass** der Zentrierrahmen (34) seitliche Rastnasen (35, 36) aufweist, welche rastend Stege (27b, 28b) an den Begrenzungsstegen (27a, 28a) hintergreifen.

13. Rahmenprofil nach einem der vorstehenden Ansprüche, **dadurch gekennzeichnet, dass** der Zentrierrahmen Führungsstege (38) für einen Kontaktstecker, insbesondere einen Piercingstecker, aufweist.

14. Rahmenprofil nach einem der vorstehenden Ansprüche, **dadurch gekennzeichnet, dass** der Zentrierrahmen (34) Rasthaken (41) zum Verrasten des zugeordneten Kontaktsteckers aufweist.

15. Rahmenprofil nach einem der vorstehenden Ansprüche, **dadurch gekennzeichnet, dass** der Zentrierrahmen (34) seitliche Abstandshalter (39) aufweist, die sich in montierter Stellung in Nutlängsrichtung erstrecken.

16. Rahmenprofil nach einem der vorstehenden Ansprüche, **dadurch gekennzeichnet, dass** mehrere der Zentrierrahmem (34) in Nutlängsrichtung einstückig miteinander verbunden sind.

17. Rahmenprofil (1, 2, 3, 4) nach dem Oberbegriff des Anspruchs 1, **gekennzeichnet durch** einen einem am Profil montierten Stecker mit isolationsdurchstechenden Kontakten (68) zum Kontaktieren der Leiter des Kabels (12).

18. Rahmenprofil nach Anspruch 17, **dadurch gekennzeichnet, dass** die isolationsdurchstechenden Kontakte als Piercingkontakte ausgestaltet sind.

19. Rahmenprofil nach Anspruch 17 oder 18, **dadurch gekennzeichnet, das**s der Stecker zum direkten oder indirekten Verrasten an der Kabelnut (11) oder einer sonstigen Nut (9) des Profils ausgelegt ist.

20. Rahmenprofil nach einem der vorstehenden Ansprüche, **dadurch gekennzeichnet, dass** der Stecker in den Zentrierrahmen (34) einsetzbar ist.

21. Rahmenprofil nach einem der vorstehenden Ansprüche, **dadurch gekennzeichnet, dass** der Piercingstecker (52) zwei Gehäuseteile - Steckeroberteil (54) und Steckerunterteil (53) - aufweist, die über Formschluss miteinander verbindbar sind.

22. Rahmenprofil nach einem der vorstehenden Ansprüche, **dadurch gekennzeichnet, dass** am Steckerunterteil die Piercingkontakte (55) ausgebildet sind.

23. Rahmenprofil nach einem der vorstehenden Ansprüche, **dadurch gekennzeichnet, dass** das Steckerunterteil (53) am Zentrierrahmen (34) verrastbar ist.

24. Rahmenprofil nach einem der vorstehenden Ansprüche, **dadurch gekennzeichnet, dass** das Steckeroberteil (54) am Steckerunterteil (53) verrastbar ist.

25. Rahmenprofil nach einem der vorstehenden Ansprüche, **dadurch gekennzeichnet, dass** das Steckerunterteil (53) und der Zentrierrahmen miteinander korrespondierende Führungskonturen zum Einführen des Stecketunterteils in den Zentrierrahmen aufweisen.

26. Rahmenprofil nach einem der vorstehenden Anspruche, **dadurch gekennzeichnet, dass** am Steckeroberteil ein Schaft (60) zum Einstecken in eine Aufnahme (61) am Steckeruaterteil ausgebildet ist

27. Rahmenprofil nach einem der vorstehenden Ansprüche, **dadurch gekennzeichnet, dass** das Steckeroberteil (54) in zwei verschiedenen Positionen in das Steckerunterteil (53) einsetzbar ist.

28. Rahmenprofil nach einem der vorstehenden Ansprüche, **dadurch gekennzeichnet, dass** am Steckerunterteil eine untere Nut (64) ausgebildet ist, die mit einem oberen Zentriersteg (65) am Zentrierrahmen (34) zusammenwirkt.

29. Rahmenprofil nach einem der vorstehenden Ansprüche, **dadurch gekennzeichnet, dass** am Stecker (66) direkt eine Rastkontur (69) zum Verrasten an einer Nut des Rahmens, hier an der Kabelnut (11), ausgebildet ist.

30. Rahmenprofil nach einem der vorstehenden Ansprüche, **dadurch gekennzeichnet, dass** am Stecker direkt ein Zentriersteg (70) zum Eingriff in die Einkerbung (13) des Kabels (12) ausgebildet ist

31. Rahmenprofil nach einem der vorstehenden Ansprüche, **dadurch gekennzeichnet, dass** zwei der Piercingstecker (66) einstückig über ein Filmscharnier (71) mit integrierten Leitern oder eine Kabelverbindung miteinander verbunden sind.

32. Rahmenprofil nach einem der vorstehenden Ansprüche, **dadurch gekennzeichnet, dass** die Piercingstecker (66) in einer 45° Stellung winklig zum Stecker ausgerichtet sind

33. Rahmenprofil nach einem der vorstehenden Ansprüche, **dadurch gekennzeichnet, dass** der Zentrierrahmen und der Stecker einstückig, aber relativ zueinander beweglich miteinander verbunden sind.

34. Rahmenprofil nach einem der vorstehenden Ansprüche, **dadurch gekennzeichnet, dass** der Zentriersteg (70) federnd ausgelegt ist oder dass der Zentriersteg (70) mit dem Gehäuse (67) des Steckers über wenigstens ein komprimierbares Federelement (73) verbunden ist.

35. Rahmenprofil (1, 2, 3, 4) für einen Blend- oder Flügelrahmen eines Fensters, einer Tür oder einer Fassade, mit einer am Außenumfang des Profils angeordneten Kabelnut (11), die ein elektrisches Kabel (12) mit wenigstens zwei oder mehr elektrischen Leitern (14) formschlüssig aufnimmt **gekennzeichnet durch** einen am Kabel montierten Stecker mit vorzugsweise isolationsdurchstechenden Kontakten (68) zum Kontaktieren der Leiter des Kabels (12).

36. Rahmenprofil nach Anspruch 35, **dadurch gekennzeichnet, dass** der Stecker (140) zum Verrasten an dem Kabel (12) ausgelegt ist.

37. Rahmenprofil nach einem der vorstehenden Ansprüche, **dadurch gekennzeichnet, dass** der Stecker (140) an dem Kabel (12) festklemmbar ist.

38. Rahmenprofil nach einem der vorstehenden Ansprüche, **dadurch gekennzeichnet, dass** die Einkerbung (13) und der Zentriersteg (141) korrespondierende, sich konisch verjüngende Querschnitte aufweisen.

39. Rahmenprofil nach einem der vorstehenden Ansprüche, **dadurch gekennzeichnet, dass** das Steckerteil (140) an seiner zum Flachkabel weisenden Seite den Zentriersteg (141) aufweist.

40. Rahmenprofil nach einem der vorstehenden Ansprüche, **dadurch gekennzeichnet, dass** korrespondierende Rastmittel (43, 44) an dem Flachbandkabel (12) und dem Stecker (140) den Stecker unverlierbar am Flachbandkabel verrasten.

41. Rahmenprofil nach einem der vorstehenden Ansprüche, **dadurch gekennzeichnet, dass** der Zentriersteg (141) am Stecker (140) abschnittsweise durch Raststege (145) mit Rastmitteln (143) ersetzt ist, die mit korrespondierenden Rastmitteln (144) in der Einkerbung des Flachbandkabels zusammenwirken.

42. Rahmenprofil nach einem der vorstehenden Ansprüche, **dadurch gekennzeichnet, dass** die Rastmittel räumlich getrennt zum Zentriersteg (141) und der Einkerbung am Flachbandkabel und am Stecker (140) ausgebildet sind.

43. Rahmenprofil nach einem der vorstehenden Ansprüche, **dadurch gekennzeichnet, dass** die Rastmittel, der Zentrieransatz (141) und die Piercingkontakte (142) derart aufeinander abgestimmt sind, dass bei der Montage des Steckers (140) am Flachbandkabel (12) zunächst die Ausrichtung am Zentrieransatz, dann die Kontaktierung und schließlich die Verrastung erfolgt.

44. Fenster, Tür oder Fassadenelement, **gekennzeichnet durch** ein Rahmenprofil nach einem der vorstehenden Ansprüche.

## Claims

1. Frame profile (1, 2, 3, 4) for a fixed frame or leaf frame of a window, a door or a facade, having an, in particular undercut, cable groove (11), which is arranged on the outer periphery of the profile, for holding an electric cable (12) having two or more electrical conductors (14) in an interlocking manner, **characterized by** a centring frame (34) for the cable (12), it being possible for the said centring frame to be fitted on the cable (12) and the said centring frame being fixed to the profile.

2. Frame profile according to Claim 1, **characterized in that** the cable is in the form of a ribbon cable (12) which has a plurality of conductors or stranded wires (14) which are arranged parallel to one another in one plane.

3. Frame profile according to Claim 1 or 2, **characterized in that** the cable sheath (15) is provided with a groove-like recess (13), and **in that** the centring frame has a corresponding web (37) for engaging in the recess (13).

4. Frame profile according to Claim 3, **characterized in that** the recess (13) and the web (37) run parallel to the conductors (14).

5. Frame profile according to one of the preceding claims, **characterized in that** the recess (13) and the web (37) have corresponding, conically tapering cross sections.

6. Frame profile according to one of the preceding claims, **characterized in that** a contact plug, in particular a piercing plug, can be inserted into the centring frame (34).

7. Frame profile according to one of the preceding claims, **characterized in that** the cable groove (11) is formed within a surrounding relatively large groove (9), in particular within a fitting groove (9) for holding fittings, in the frame profile, and **in that** the centring frame is designed to latch into the surrounding groove.

8. Frame profile according to one of the preceding claims, **characterized in that** the centring frame (34) is designed to latch into the fitting groove (9).

9. Frame profile according to one of the preceding claims, **characterized in that** the centring frame (34) is designed to latch into the cable groove (11).

10. Frame profile according to one of the preceding claims, **characterized in that** the centring frame (34) can be screwed to the profile.

11. Frame profile according to one of the preceding claims, **characterized in that** the ribbon cable (12) has lateral lugs (17) which engage elastically behind webs (22) on the cable groove (11) in the assembled state.

12. Frame profile according to one of the preceding claims, **characterized in that** the centring frame (34) has lateral latching lugs (35, 36) which engage behind webs (27b, 28b) on the boundary webs (27a, 28a) in a latching manner.

13. Frame profile according to one of the preceding claims, **characterized in that** the centring frame has guide webs (38) for a contact plug, in particular a piercing plug.

14. Frame profile according to one of the preceding claims, **characterized in that** the centring frame (34) has latching hooks (41) for latching the associated contact plug.

15. Frame profile according to one of the preceding claims, **characterized in that** the centring frame (34) has lateral spacers (39) which extend in the longitudinal direction of the groove in the mounted position.

16. Frame profile according to one of the preceding claims, **characterized in that** a plurality of centring frames (34) are integrally connected to one another in the longitudinal direction of the groove.

17. Frame profile (1, 2, 3, 4) according to the preamble of Claim 1, **characterized by** a plug which is mounted on the profile and has insulation-puncturing contacts (68) for making contact with the conductors in the cable (12).

18. Frame profile according to Claim 17, **characterized in that** the insulation-puncturing contacts are designed as piercing contacts.

19. Frame profile according to Claim 17 or 18, **characterized in that** the plug is designed to directly or indirectly latch into the cable groove (11) or another groove (9) in the profile.

20. Frame profile according to one of the preceding claims, **characterized in that** the plug can be inserted into the centring frame (34).

21. Frame profile according to one of the preceding claims, **characterized in that** the piercing plug (52) has two housing parts - upper plug part (54) and lower plug part (53) - which can be connected to one another by means of an interlocking connection.

22. Frame profile according to one of the preceding claims, **characterized in that** the piercing contacts (55) are formed on the lower plug part.

23. Frame profile according to one of the preceding claims, **characterized in that** the lower plug part (53) can be latched to the centring frame (34).

24. Frame profile according to one of the preceding claims, **characterized in that** the upper plug part (54) can be latched to the lower plug part (53).

25. Frame profile according to one of the preceding claims, **characterized in that** the lower plug part (53) and the centring frame have guide contours, which correspond to one another, for inserting the lower plug part into the centring frame.

26. Frame profile according to one of the preceding claims, **characterized in that** a shaft (60) which is to be inserted into a receptacle (61) in the lower plug part is formed on the upper plug part.

27. Frame profile according to one of the preceding claims, **characterized in that** the upper plug part (54) can be inserted into the lower plug part (53) in two different positions.

28. Frame profile according to one of the preceding claims, **characterized in that** a lower groove (64) is formed on the lower plug part, the said lower groove interacting with an upper centring web (65) on the centring frame (34).

29. Frame profile according to one of the preceding claims, **characterized in that** a latching contour (69) for latching into a groove in the frame, into the cable groove (11) in this case, is formed directly on the plug (66).

30. Frame profile according to one of the preceding claims, **characterized in that** a centring web (70) for engaging in the recess (13) in the cable (12) is formed directly on the plug.

31. Frame profile according to one of the preceding claims, **characterized in that** two of the piercing plugs (66) are integrally connected to one another by means of a film hinge (71) having integrated conductors or by means of a cable connection.

32. Frame profile according to one of the preceding claims, **characterized in that** the piercing plugs (66) are oriented at an angle of 45° relative to the plug.

33. Frame profile according to one of the preceding claims, **characterized in that** the centring frame and the plug are integrally connected to one another but such that they can be moved relative to one another.

34. Frame profile according to one of the preceding claims, **characterized in that** the centring web (70) is resilient, or **in that** the centring web (70) is connected to the housing (67) of the plug by means of at least one compressible spring element (73).

35. Frame profile (1, 2, 3, 4) for a fixed frame or leaf frame of a window, a door or a facade, having a cable groove (11) which is arranged on the outer periphery of the profile and accommodates an electric cable (12) having at least two or more electrical conductors (14) in an interlocking manner, **characterized by** a plug which is mounted on the cable and has preferably insulation-puncturing contacts (68) for making contact with the conductors of the cable (12).

36. Frame profile according to Claim 35, **characterized in that** the plug (140) is designed to latch onto the cable (12).

37. Frame profile according to one of the preceding claims, **characterized in that** the plug (140) can be firmly clamped to the cable (12).

38. Frame profile according to one of the preceding claims, **characterized in that** the recess (13) and the centring web (141) have corresponding conically tapering cross sections.

39. Frame profile according to one of the preceding claims, **characterized in that** the plug part (140) has the centring web (141) on its side which faces the flat cable.

40. Frame profile according to one of the preceding claims, **characterized in that** corresponding latching means (43, 44) on the ribbon cable (12) and the plug (140) latch the plug captively to the ribbon cable.

41. Frame profile according to one of the preceding claims, **characterized in that** the centring web (141) on the plug (140) is replaced, in sections, by latching webs (145) having latching means (143) which interact with corresponding latching means (144) in the recess in the ribbon cable.

42. Frame profile according to one of the preceding claims, **characterized in that** the latching means are formed on the ribbon cable and on the plug (140) physically separately from the centring web (141) and the recess.

43. Frame profile according to one of the preceding claims, **characterized in that** the latching means, the centring projection (141) and the piercing contacts (142) are matched to one another in such a way that, when the plug (140) is mounted on the ribbon cable (12), first the centring projection is aligned, then contact is made and finally latching is performed.

44. Window, door or facade element, **characterized by** a frame profile according to one of the preceding claims.

## Revendications

1. Profilé de cadre (1, 2, 3, 4) pour dormant ou battant d'une fenêtre, d'une porte ou d'une façade avec une rainure pour câble (11) agencée, en particulier contre-dépouillée, au niveau de la périphérie extérieure du profilé pour recevoir par complémentarité de forme un câble électrique (12) à deux ou plusieurs conducteurs électriques (14), **caractérisé par** un cadre de centrage (34) pour le câble (12) pouvant être posé sur le câble (12) et fixé sur le profilé.

2. Profilé de cadre selon la revendication 1, **caractérisé en ce que** le câble est réalisé sous forme de câble plat (12) qui présente plusieurs conducteurs respectivement torons (14) disposés parallèlement les uns aux autres dans un plan.

3. Profilé de cadre selon la revendication 1 ou 2, **caractérisé en ce que** la gaine du câble (15) est dotée d'une entaille (13) en forme de rainure et **en ce que** le cadre de centrage présente une moulure (37) correspondante pour venir en prise dans l'entaille (13).

4. Profilé de cadre selon la revendication 3, **caractérisé en ce que** l'entaille (13) et la moulure (37) s'étendent parallèlement aux conducteurs (14).

5. Profilé de cadre selon l'une quelconque des revendications précédentes, **caractérisé en ce que** l'entaille (13) et la moulure (37) présentent des sections transversales coniques correspondantes.

6. Profilé de cadre selon l'une quelconque des revendications précédentes, **caractérisé en ce qu**'une fiche de contact, en particulier une fiche piercing, peut être insérée dans le cadre de centrage (34).

7. Profilé de cadre selon l'une quelconque des revendications précédentes, **caractérisé en ce que** la rainure pour câble (11) est réalisée au niveau du profilé de cadre à l'intérieur d'une rainure (9) plus grande qui l'entoure, en particulier à l'intérieur d'une rainure pour ferrure (9) destinée à recevoir des ferrures et **en ce que** le cadre de centrage est conçu pour s'enclencher au niveau de la rainure qui l'entoure.

8. Profilé de cadre selon l'une quelconque des revendications précédentes, **caractérisé en ce que** le cadre de centrage (34) est conçu pour s'enclencher au niveau de la rainure pour ferrure (9).

9. Profilé de cadre selon l'une quelconque des revendications précédentes, **caractérisé en ce que** le cadre de centrage (34) est conçu pour s'enclencher au niveau de la rainure pour câble (11).

10. Profilé de cadre selon l'une quelconque des revendications précédentes, **caractérisé en ce que** le cadre de centrage (34) peut être vissé sur le profilé.

11. Profilé de cadre selon l'une quelconque des revendications précédentes, **caractérisé en ce que** le câble plat (12) présente des ergots latéraux (17) qui, à l'état monté, viennent en prise de manière élastique derrière des moulures (22) de la rainure pour câble (11).

12. Profilé de cadre selon l'une quelconque des revendications précédentes, **caractérisé en ce que** le cadre de centrage (34) présente des ergots d'encliquetage latéraux (35, 36) qui viennent en prise par encliquetage derrière des moulures (27b, 28b) au niveau des moulures de limitation (27a, 28a).

13. Profilé de cadre selon l'une quelconque des revendications précédentes, **caractérisé en ce que** le cadre de centrage présente des moulures de guidage (38) pour une fiche de contact, en particulier une fiche piercing.

14. Profilé de cadre selon l'une quelconque des revendications précédentes, **caractérisé en ce que** le cadre de centrage (34) présente des crochets d'encliquetage (41) pour l'enclenchement de la fiche de contact correspondante.

15. Profilé de cadre selon l'une quelconque des revendications précédentes, **caractérisé en ce que** le cadre de centrage (34) présente des écarteurs latéraux (39) qui s'étendent à l'état monté dans le sens longitudinal de la rainure.

16. Profilé de cadre selon l'une quelconque des revendications précédentes, **caractérisé en ce que** plusieurs cadres de centrage (34) sont reliés l'un à l'autre d'un seul tenant dans le sens longitudinal de la rainure.

17. Profilé de cadre (1, 2, 3, 4) selon le préambule de la revendication 1, **caractérisé par** une fiche montée sur le profilé avec des contacts (68) perforant l'isolation destinés à établir le contact avec les conducteurs du câble (12).

18. Profilé de cadre selon la revendication 17, **caractérisé en ce que** les contacts perforant l'isolation sont réalisés sous forme de contacts piercing.

19. Profilé de cadre selon la revendication 17 ou 18, **caractérisé en ce que** la fiche est conçue pour s'enclencher directement ou indirectement au niveau de la rainure pour câble (11) ou d'une autre rainure (9) du profilé.

20. Profilé de cadre selon l'une quelconque des revendications précédentes, **caractérisé en ce que** la fiche peut être insérée dans le cadre de centrage (34).

21. Profilé de cadre selon l'une quelconque des revendications précédentes, **caractérisé en ce que** la fiche piercing (52) présente deux parties de boîtier, la partie supérieure de la fiche (54) et la partie inférieure de la fiche (53), qui peuvent être reliées l'une à l'autre par complémentarité de forme.

22. Profilé de cadre selon l'une quelconque des revendications précédentes, **caractérisé en ce que** les contacts piercing (55) sont réalisés au niveau de la partie inférieure de la fiche.

23. Profilé de cadre selon l'une quelconque des revendications précédentes, **caractérisé en ce que** la partie inférieure de la fiche (53) peut s'enclencher au niveau du cadre de centrage (34).

24. Profilé de cadre selon l'une quelconque des revendications précédentes, **caractérisé en ce que** la partie supérieure de la fiche (54) peut s'enclencher au niveau de la partie inférieure de la fiche (53).

25. Profilé de cadre selon l'une quelconque des revendications précédentes, **caractérisé en ce que** la partie inférieure de la fiche (53) et le cadre de centrage présentent des contours de guidage correspondant les uns aux autres destinés à introduire la partie inférieure de la fiche dans le cadre de centrage.

26. Profilé de cadre selon l'une quelconque des revendications précédentes, **caractérisé en ce qu'**une tige (60) est réalisée au niveau de la partie supérieure de la fiche pour être insérée dans un logement (61) au niveau de la partie inférieure de la fiche.

27. Profilé de cadre selon l'une quelconque des revendications précédentes, **caractérisé en ce que** la partie supérieure de la fiche (54) peut être insérée dans deux positions différentes dans la partie inférieure de la fiche (53).

28. Profilé de cadre selon l'une quelconque des revendications précédentes, **caractérisé en ce qu'**une rainure inférieure (64) qui coopère avec une moulure de centrage supérieure (65) au niveau du cadre de centrage (34) est réalisée au niveau de la partie inférieure de la fiche.

29. Profilé de cadre selon l'une quelconque des revendications précédentes, **caractérisé en ce qu'**un contour d'encliquetage (69) destiné à s'enclencher au niveau d'une rainure du cadre, ici au niveau de la rainure pour câble (11), est réalisé directement sur la fiche (66).

30. Profilé de cadre selon l'une quelconque des revendications précédentes, **caractérisé en ce qu'**une moulure de centrage (70) destinée à venir en prise dans l'entaille (13) du câble (12) est réalisée directement sur la fiche.

31. Profilé de cadre selon l'une quelconque des revendications précédentes, **caractérisé en ce que** deux des fiches piercing (66) sont reliées l'une à l'autre d'un seul tenant par le biais d'une charnière film (71) à conducteurs intégrés ou d'une liaison par câble.

32. Profilé de cadre selon l'une quelconque des revendications précédentes, **caractérisé en ce que** les fiches piercing (66) sont orientées de façon à former un angle de 45° avec la fiche.

33. Profilé de cadre selon l'une quelconque des revendications précédentes, **caractérisé en ce que** le cadre de centrage et la fiche sont reliés l'un à l'autre d'un seul tenant, mais de manière relativement mobile l'un par rapport à l'autre.

34. Profilé de cadre selon l'une quelconque des revendications précédentes, **caractérisé en ce que** la moulure de centrage (70) est conçue de manière élastique ou **en ce que** la moulure de centrage (70) est reliée au boîtier (67) de la fiche par le biais d'au moins un élément formant ressort (73) compressible.

35. Profilé de cadre (1, 2, 3, 4) pour dormant ou battant d'une fenêtre, d'une porte ou d'une façade avec une rainure pour câble (11) agencée au niveau de la périphérie extérieure du profilé laquelle reçoit par complémentarité de forme un câble électrique (12) à au moins deux ou plusieurs conducteurs électriques (14), **caractérisé par** une fiche montée sur le câble avec de préférence des contacts (68) perforant l'isolation destinés à établir le contact avec les conducteurs du câble (12).

36. Profilé de cadre selon la revendication 35, **caractérisé en ce que** la fiche (140) est conçue pour s'enclencher au niveau du câble (12).

37. Profilé de cadre selon l'une quelconque des revendications précédentes, **caractérisé en ce que** la fiche (140) peut être fixée par serrage sur le câble (12).

38. Profilé de cadre selon l'une quelconque des revendications précédentes, **caractérisé en ce que** l'entaille (13) et la moulure de centrage (141) présentent des sections transversales coniques correspondantes.

39. Profilé de cadre selon l'une quelconque des revendications précédentes, **caractérisé en ce que** la fiche (140) présente la moulure de centrage (141) sur son côté tourné vers le câble plat.

40. Profilé de cadre selon l'une quelconque des revendications précédentes, **caractérisé en ce que** des moyens d'encliquetage (43, 44) correspondants au niveau du câble plat (12) et de la fiche (140) enclenchent la fiche de manière imperdable au niveau du câble plat.

41. Profilé de cadre selon l'une quelconque des revendications précédentes, **caractérisé en ce que** la moulure de centrage (141) au niveau de la fiche (140) est remplacée par section par des moulures d'encliquetage (145) avec moyens d'encliquetage (143) qui coopèrent avec des moyens d'encliquetage (144) correspondants dans l'entaille du câble plat.

42. Profilé de cadre selon l'une quelconque des revendications précédentes, **caractérisé en ce que** les moyens d'encliquetage sont réalisés de manière spatialement séparée par rapport à la moulure de centrage (141) et l'entaille au niveau du câble plat et de la fiche (140).

43. Profilé de cadre selon l'une quelconque des revendications précédentes, **caractérisé en ce que** les moyens d'encliquetage, la saillie de centrage (141) et les contacts piercing (142) sont adaptés l'un à l'autre de telle sorte que lors du montage de la fiche (140) sur le câble plat (12), il y a d'abord orientation par rapport à la saillie de centrage, puis établissement du contact et enfin enclenchement.

44. Fenêtre, porte ou élément de façade, **caractérisés par** un profilé de cadre selon l'une quelconque des revendications précédentes.
